# EUROPÄISCHE PATENTSCHRIFT

(11) **EP 2 305 388 B1**
(45) Veröffentlichungstag und Bekanntmachung des Hinweises auf die Patenterteilung: **01.02.2012**
(21) Anmeldenummer: 09012438.9
(22) Anmeldetag: 01.10.2009
(51) Int. Cl.: B05B 5/08, C11D 17/00, B65G 17/32, B05B 13/02, B05B 15/12, B05C 19/02

(54) **Vorrichtung zum Beschichten von Gegenständen**
Device for coating objects
Dispositif de revêtement d'objets

(43) Veröffentlichungstag der Anmeldung: 06.04.2011
(73) Patentinhaber: Dalli-Werke GmbH & Co. KG, 52224 Stolberg (DE)
(72) Erfinder: Bock, Michael, 52146 Würselen (DE); Belten-Casteel, Sascha, 52064 Aachen (DE); Krist, Gerard, 8014 ZD Zwolle (NL)
(74) Vertreter: Polypatent

(56) Entgegenhaltungen:
- EP-A1- 0 519 300
- EP-A1- 2 045 319
- EP-A2- 0 611 604
- WO-A2-2005/049452

## Beschreibung

Die Erfindung betrifft eine Vorrichtung zum Beschichten von Gegenständen, insbesondere von Reinigungsmittel-Tabletten.

Aus dem Stand der Technik ist es bekannt, Reinigungsmittel-Tabletten zu beschichten oder einzeln zu verpacken, um einen direkten Kontakt des Benutzers mit den Inhaltsstoffen der Reinigungsmittel-Tablette zu vermeiden, da die Reinigungsmitteltablette einen hohen pH-Wert aufweist, der zu Hautirritationen bei dem Benutzer führen kann. Die Beschichtung der Reinigungsmitteltablette wird dabei üblicherweise durch Aufbringen einer Flüssigkeit oder Lösung des Beschichtungsmaterials auf die Oberfläche der Reinigungsmitteltablette aufgebracht, beispielsweise durch Sprühen, Eintauchen, Rollen oder ähnliche Verfahren, und einem nachträglichen Trocknen der beschichteten Reinigungsmitteltablette.

Die EP-A 1 360 271 offenbart das Beschichten einer Reinigungsmitteltablette, wobei die Reinigungsmittel-Tabletten über ein Förderband mit Löchern transportiert werden und das Beschichtungsmaterial durch die Löcher gepresst wird, um die untere Oberfläche der Reinigungsmitteltablette zu kontaktieren und gleichzeitigem Transportieren der Reinigungsmittel-Tabletten durch einen Vorhangbeschichter, um die obere Oberfläche der Reinigungsmitteltablette mit dem Beschichtungsmaterial zu beschichten.

Aus der EP-A 2 045 319 ist ein Verfahren zum Beschichten von Reinigungsmittel-Tabletten bekannt, wobei die Oberfläche der Reinigungsmitteltablette mit einem Pulver in Kontakt gebracht wird und anschließend Energie und/oder Dampf auf das Puder auf der Oberfläche der Reinigungsmitteltablette aufgebracht wird.

Aufgabe der vorliegenden Erfindung ist es, eine Vorrichtung zum Beschichten von Gegenständen, insbesondere von Reinigungsmittel-Tabletten, nach dem Verfahren aus der EP 2 045 319 A1 bereitzustellen.

Die Aufgabe wird gelöst durch eine Vorrichtung zum Beschichten von Gegenständen, insbesondere von Reinigungsmittel-Tabletten, umfassend eine Zuführstation zur sequentiellen Zuführung der Gegenstände an eine erste Fördereinrichtung, wobei die erste Fördereinrichtung eine Vielzahl von ersten Greifelementen zum Halten jeweils eines Gegenstandes aufweist, eine Beschichtungskammer, durch die die Gegenstände mittels der ersten Fördereinrichtung hindurchführbar sind, mit wenigstens einer Sprühvorrichtung oder Verwirbelungseinrichtung innerhalb der Beschichtungskammer zur Bereitstellung eines Partikel-Luft-Gemischs, wobei die Partikel ein Material umfassen, mit dem die Gegenstände beschichtet werden sollen, wobei der zu beschichtende Gegenstand mit einem elektrischen Potenzial verbunden ist, eine Elektrode zur Erzeugung eines zweiten elektrischen Potenzials, wobei die Partikel mittels der Elektrode mit dem zweiten elektrischen Potenzial versehen werden, wobei das erste und zweite elektrische Potenzial voneinander verschieden sind, eine zweite Fördereinrichtung mit einer Vielzahl von zweiten Greifelementen zum Halten jeweils eines Gegenstandes, eine Übergabevorrichtung, die zwischen der ersten und der zweiten Fördereinrichtung angeordnet ist, zur Übergabe von Gegenständen von den ersten Greifelementen der ersten Fördereinrichtung an die zweiten Greifelemente der zweiten Fördereinrichtung, eine Behandlungskammer, durch die die Gegenstände mittels der zweiten Fördereinrichtung hindurchführbar sind, mit einem oder mehreren Applikatoren innerhalb der Behandlungskammer zum Beaufschlagen zumindest der Oberfläche der Gegenstände mit Energie, und eine Entnahmestation zur Entnahme der behandelten Gegenstände von der zweiten Fördereinrichtung.

Die Zuführstation der erfindungsgemäßen Vorrichtung dient zur sequentiellen Zuführung von zu beschichtenden Gegenständen an eine erste Fördereinrichtung. Die erste Fördereinrichtung weist eine Vielzahl von ersten Greifelementen zum Halten jeweils eines Gegenstandes auf, so dass die erste Fördereinrichtung, die von der Zuführstation zugeführten Gegenstände aufnehmen kann. Mittels der ersten Fördereinrichtung werden die aufgenommenen Gegenstände durch eine Beschichtungskammer hindurchgeführt. Die Beschichtungskammer weist wenigstens eine Sprühvorrichtung oder Verwirbelungseinrichtung innerhalb der Beschichtungskammer auf zur Bereitstellung eines Partikel-Luft-Gemischs, wobei die Partikel ein Material umfassen, mit dem die Gegenstände beschichtet werden sollen. Die Sprühvorrichtung versprüht ein Material, mit welchem der zu beschichtende Gegenstand beschichtet werden soll, vorzugsweise in Pulverform. Die alternative Verwirbelungseinrichtung erzeugt eine Wirbelschicht aus dem Beschichtungsmaterial und Luft. Wenigstens während des Sprühvorgangs bzw. während er sich innerhalb der Wirbelschicht befindet ist der zu beschichtende Gegenstand mit einem ersten elektrischen Potenzial verbunden. Die Beschichtungskammer umfasst weiterhin eine Elektrode zur Erzeugung eines zweiten elektrischen Potenzials, wobei die Partikel mittels der Elektrode mit dem zweiten elektrischen Potenzial versehen werden, wobei das erste und zweite elektrische Potenzial voneinander verschieden sind. Durch die unterschiedlichen Potenziale wird erreicht, dass das Beschichtungsmaterial von dem zu beschichtenden Gegenstand angezogen wird. Die Haftung zwischen Beschichtungsmaterial und dem zu beschichtenden Gegenstand kann durch eine entsprechende Materialauswahl verbessert werden, beispielsweise durch Verwendung von Gelantine als Beschichtungsmaterial. Die erfindungsgemäße Vorrichtung umfasst weiterhin eine zweite Fördereinrichtung mit einer Vielzahl von Greifelementen zum Halten jeweils eines Gegenstandes. Zwischen der ersten und der zweiten Fördereinrichtung ist eine Übergabevorrichtung angeordnet, zur Übergabe der Gegenstände von den ersten Greifelementen der ersten Fördereinrichtung an die zweiten Greifelemente der zweiten Fördereinrichtung. Mittels der zweiten Fördereinrichtung sind die übergebenen Gegenstände durch eine Behandlungskammer hindurchführbar. Innerhalb der Behandlungskammer sind ein oder mehrere Applikatoren angeordnet, zum Beaufschlagen zumindest der Oberfläche der Gegenstände mit Energie. Nachfolgend zu der Behandlungskammer weist die erfindungsgemäße Vorrichtung eine Entnahmestation zur Entnahme der behandelten Gegenstände von der zweiten Fördereinrichtung auf.

Die erfindungsgemäße Vorrichtung hat den Vorteil, dass die zu beschichtenden Gegenstände mittels unterschiedlicher Fördereinrichtungen durch die Beschichtungskammer und die Behandlungskammer hindurchgeführt werden. Dadurch wird ein Verschmutzen der Fördereinrichtungen deutlich verringert und eine Reinigung der Fördereinrichtungen erleichtert. Die erste Fördereinrichtung befördert die zu beschichtenden Gegenstände durch die Beschichtungskammer, wobei neben den zu beschichtenden Gegenständen auch die Greifelemente zum Halten der Gegenstände sowie Förderelemente der Fördereinrichtung mit dem Beschichtungsmaterial besprüht werden. Da das Material jedoch noch unbehandelt ist, kann es auf einfache Art und Weise von den Elementen der ersten Fördereinrichtung gelöst werden, beispielsweise kann ein versprühtes Pulver durch ein Gebläse entfernt werden, vorzugsweise nach der Übergabe der zu beschichtenden Gegenstände an die zweite Fördereinrichtung. Beim Hindurchführen der zu beschichtenden Gegenstände durch die Behandlungskammer ist lediglich der zu beschichtende Gegenstand mit dem Material aus der Beschichtungskammer behandelt und nicht Teile der zweiten Fördereinrichtung, wie beispielsweise die zweiten Greifelemente. Dadurch wird während der Beaufschlagung mit Energie weitgehend vermieden, dass ein Beschichtungsfilm auf den zweiten Greifelementen entsteht und sich weiter aufbauen kann, so dass Funktionsstörungen weitestgehend vermieden werden können.

Zweckmäßigerweise ist die Elektrode in die Sprühvorrichtung integriert.

Nach einer bevorzugten Ausführungsform der Erfindung umfasst die Vorrichtung wenigstens eine Kühlstation zum Kühlen der Oberfläche der Gegenstände. Je nach Beschichtungsmaterial weist das Beschichtungsmaterial erst nach Abkühlen seine endgültigen Eigenschaften auf, so dass die beschichteten Gegenstände erst nach dem Abkühlen weiterverarbeitet werden können. Zur Beschleunigung dieses Prozesses dient die erfindungsgemäße Kühlstation.

Zweckmäßigerweise ist die Kühlstation zwischen Behandlungskammer und Entnahmestation angeordnet, oder die Kühlstation ist nach der Entnahmestation angeordnet, oder es ist jeweils eine Kühlstation vor und hinter der Entnahmestation angeordnet. Die beschichteten Gegenstände können beispielsweise mittels der zweiten Fördereinrichtung oder einer weiteren, dritten Fördereinrichtung durch die Kühlstation transportiert werden. Dies hat den Vorteil, dass die einzelnen Fördereinrichtungen an die jeweiligen Einsatzgebiete angepasst werden können, beispielsweise hinsichtlich der verwendeten Materialien. Weiterhin kann dadurch der Energiebedarf beim Betrieb der Vorrichtung verringert werden.

Die wenigstens eine Kühlstation umfasst dabei bevorzugt eine Luft-Gegenstrom-Kühlung. Die Luft-Gegenstrom-Kühlung hat den Vorteil, dass diese durch Beibehalten eines Temperaturgefälles sehr effizient und somit kostengünstig ist.

Nach einem bevorzugten Ausführungsbeispiel der Erfindung umfasst die erste und/oder zweite und/oder dritte Fördereinrichtung ein endloses Fördermittel. Dieses Fördermittel kann beispielsweise durch eine Rollenkette ausgebildet sein, vorzugsweise durch eine metallische Rollenkette. Auch können die Fördermittel der Fördereinrichtungen miteinander gekoppelt sein, um die Fördermittel der verschiedenen Fördereinrichtungen miteinander zu synchronisieren.

Nach einer weiteren bevorzugten Ausführungsform der Erfindung umfassen wenigstens die ersten Greifelemente ein elektrisch leitfähiges Material, um die zu beschichtenden Gegenstände mit dem ersten elektrischen Potenzial zu verbinden. Dies hat den Vorteil, dass der zu beschichtende Gegenstand nicht über eine zusätzliche Verbindung mit dem ersten elektrischen Potenzial verbunden werden muss, sondern dass die Verbindung über die ersten Greifelemente hergestellt wird. Des Weiteren umfassen wenigstens die zweiten Greifelemente vorzugsweise ein hitzebeständiges und/oder feuchtigkeitsbeständiges Material, wie beispielsweise Carbonfaser oder Graphit.

Nach einem besonders bevorzugten Ausführungsbeispiel der Erfindung bestehen wenigstens die ersten Greifelemente aus Metall, vorzugsweise aus Federstahl. Als besonders vorteilhaft hat sich herausgestellt, wenn die Greifelemente aus Metall mit Ausnahme des Kontaktbereichs zwischen Greifelement und zu beschichtenden Gegenstand, mit einem elektrisch nicht leitfähigem Material beschichtet sind.

Nach einem bevorzugten Ausführungsbeispiel der Erfindung umfassen die Vielzahl von ersten und/oder zweiten Greifelementen, die wenigstens zwei Schenkel aufweisen, die im Wesentlichen quer zur Bewegungsrichtung der ersten und/oder zweiten Fördereinrichtung gegen elastische Rückstellkräfte verformbar sind, wobei die Schenkel ein erstes Befestigungsende und ein zweites Greifende aufweisen, und die Greifelement nahe des Befestigungsendes mit der ersten und/oder zweiten Fördereinrichtung verbunden sind, und wobei jedes Greifende eines Schenkels wenigstens ein Kontaktende, vorzugsweise wenigstens zwei Kontaktenden, aufweist, wobei die Kontaktenden der wenigstens zwei Schenkel annähernd quer zur Bewegungsrichtung der ersten und/oder der zweiten Fördereinrichtung aufeinander zu weisen, um den Gegenstand von gegenüberliegenden Seiten zu kontaktieren. Die Greifelemente sind so ausgebildet, dass der zu haltende Gegenstand von gegenüberliegenden Seiten kontaktiert wird und mittels der elastischen Rückstellkräfte der Greifelemente gehalten wird. Dabei sollten die Kontaktflächen zwischen dem zu haltenden Gegenstand und den Greifelementen möglichst gering sein, damit der Gegenstand nahezu komplett beschichtet wird. Eine Beschädigung des zu haltenden Gegenstands ist durch eine Anpassung der Größe der Kontaktflächen und der auftretenden elastischen Rückstellkräfte der Greifelemente zu vermeiden.

Nach einer weiteren Ausführungsform der Erfindung umfasst der Applikator Düsen zum Einblasen von Wasserdampf, insbesondere überhitztem Wasserdampf. Mittels Wasserdampf wird das Material, das auf den zu beschichtenden Gegenstand in der Beschichtungskammer aufgebracht wurde, mit Energie in Form von Hitze beaufschlagt, wodurch das aufgebrachte Material in eine Schutzschicht umgewandelt wird, beispielsweise wird aus einem aufgebrachten Pulver mittels Wasserdampf eine feste, wasserlösliche Schutzschicht gebildet, die fest mit dem Gegenstand verbunden ist. Bei der Verwendung von überhitztem Wasserdampf wird eine besonders schnelle Trocknung der Beschichtung erreicht.

Nach einer besonders bevorzugten Ausführungsform der Erfindung weist die Beschichtungskammer Wandungen auf, wobei zumindest die innenseitigen Oberflächen aus PTFE bestehen. Dies hat den Vorteil, dass wenigstens die innenseitigen Oberflächen der Beschichtungskammer nicht leitfähig sind, und dass an der inneren Oberfläche der Beschichtungskammer nahezu kein versprühtes Material, welches zur Beschichtung des Gegenstands dient, haften bleibt. Alternativ kann die gesamte Beschichtungskammer aus PTFE hergestellt werden.

Zweckmäßigerweise ist die Sprühvorrichtung zum Versprühen eines pulverförmigen Materials ausgebildet, vorzugsweise mit einer Korngröße zwischen 1 und 1.000 µm, insbesondere mit einer mittleren Korngröße von ungefähr 200 µm.

Nach einer bevorzugten Ausführungsform der Erfindung umfasst die Beschichtungskammer eine Absaugvorrichtung zum Absaugen eines Überschusses an Material (Overspray), welches mittels der Sprühvorrichtung in die Beschichtungskammer gesprüht wurde. Dadurch wird gewährleistet, dass überschüssiges Material aus der Beschichtungskammer entfernt und einer Aufbereitung unterzogen werden kann. Alternativ oder zusätzlich zu der Absaugvorrichtung kann die Beschichtungskammer eine mechanische Austragseinrichtung umfassen, beispielsweise in Form einer Förderschnecke, um das überschüssige Material aus der Beschichtungskammer zu entfernen.

Nach einer weiteren bevorzugten Ausführungsform der Erfindung steht die Absaugvorrichtung und/oder die mechanische Fördereinrichtung in Strömungsverbindung mit einer Absetzkammer, wobei die Absetzkammer mit einer Fördereinrichtung zur Förderung von Beschichtungsmaterial aus der Absetzkammer zu der wenigstens einen Sprühvorrichtung verbunden ist. Durch den daraus entstehenden Kreislauf wird der Verbrauch an Beschichtungsmaterial reduziert, da lediglich das Material, das sich an dem zu beschichtenden Gegenstand und ggf. an der ersten Fördereinrichtung abgesetzt hat, den Beschichtungsmaterial-Kreislauf verlässt und somit als verbraucht angesehen werden kann.

Bevorzugt ist zwischen Absetzkammer, und Sprühvorrichtung eine Klassifizierungseinrichtung zum Abscheiden von Partikeln vorgesehen, die eine vorgegebene Korngröße überschreiten, und eine optionale Mahleinrichtung zur Zerkleinerung von durch die Klassifizierungseinrichtung abgeschiedenen Partikeln und Rückführen der zerkleinerten Partikel. Dadurch wird der Verbrauch an Beschichtungsmaterial weiter reduziert, da der Overspray vollständig wiederverwendet werden kann. Alternativ kann ein vorgegebener Teil des Beschichtungsmaterial-Kreislaufs durch die optionale Mahleinrichtung geführt werden ohne eine vorherige Klassifizierung.

Zweckmäßigerweise weist die Zuführstation, die Übergabevorrichtung und/oder die Entnahmestation eine Einrichtung zum Spreizen der Greifelemente auf, um den zu beschichtenden oder beschichteten Gegenstand mit einem Greifelement zu verbinden oder von diesem zu lösen. Die Einrichtung zum Spreizen der Greifelemente verformt die Greifelemente entgegen der elastischen Rückstellkräfte, so dass die Kontaktenden der Schenkel der Greifelemente voneinander weg bewegt werden. Dadurch kann ein Gegenstand zwischen die Schenkel der Greifelement eingebracht werden, welcher nach dem Passieren der Einrichtung zum Spreizen der Greifelemente mittels der elastischen Rückstellkräfte der Greifelemente von den Kontaktenden der zwei Schenkel aufgenommen wird. Andererseits kann ein bereits von einem Greifelement gehaltener Gegenstand durch Spreizen der Kontaktenden der zwei Schenkel voneinander weg von dem Greifelement gelöst werden. An der Übergabestation wird beispielsweise ein Gegenstand, der von einem ersten Greifelement der ersten Fördereinrichtung gehalten wird, gleichzeitig von einem zweiten Greifelement der zweiten Fördereinrichtung gegriffen und gehalten und anschließend von dem ersten Greifelement der ersten Fördereinrichtung gelöst.

Bevorzugt ist nach der Beschichtungskammer und/oder nach der Behandlungskammer eine Prüfeinrichtung vorgesehen, um zu überprüfen, ob der Gegenstand in der Beschichtungskammer vollständig mit Material bedeckt wurde bzw. ob in der Behandlungskammer das Material auf dem Gegenstand vollständig behandelt wurde und der Gegenstand komplett beschichtet ist. Beispielsweise kann nach der Beschichtungskammer mittels einer optischen Einrichtung überprüft werden, ob der Gegenstand die Farbe des Beschichtungsmaterials aufweist und/oder ob der Gegenstand nach der Behandlungskammer die Farbe und/oder den Glanz der gewünschten Beschichtung aufweist.

Zur Erhöhung des Durchsatzes einer erfindungsgemäßen Vorrichtung können mehrere erste Fördereinrichtungen und/oder zweite Fördereinrichtungen vorgesehen sein, die die Gegenstände durch dieselbe Beschichtungskammer bzw. Behandlungskammer hindurchführen.

Nachfolgend wird die Erfindung anhand eines in den Figuren dargestellten Ausführungsbeispiels näher erläutert.

Es zeigen:
- Figur 1: erfindungsgemäße Vorrichtung
- Figur 2: Detailansicht eines Greifelements
- Figur 3: Detailansicht Entnahmestation
- Figur 4: Detailansicht Spreizvorrichtung

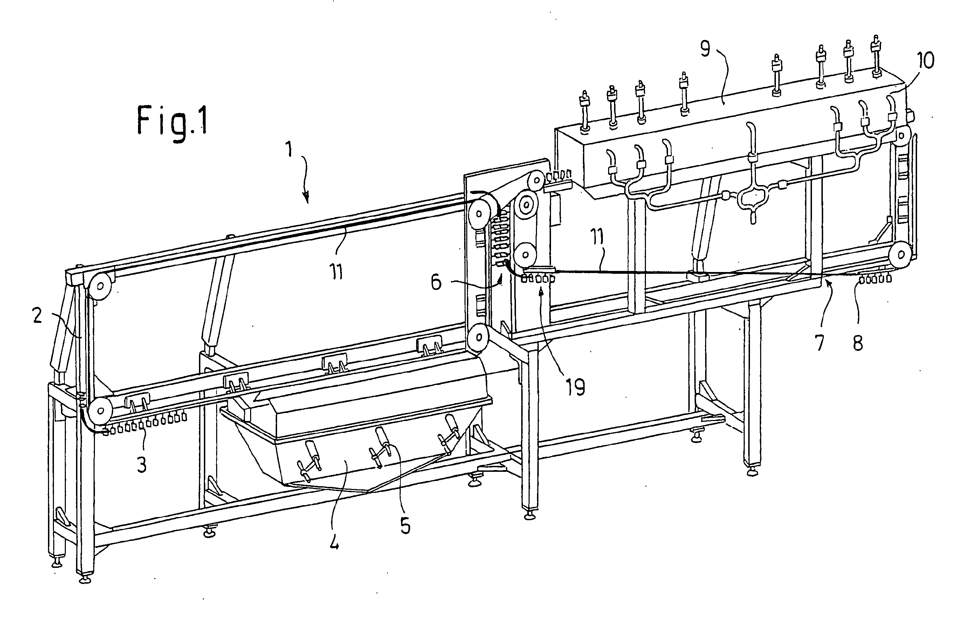

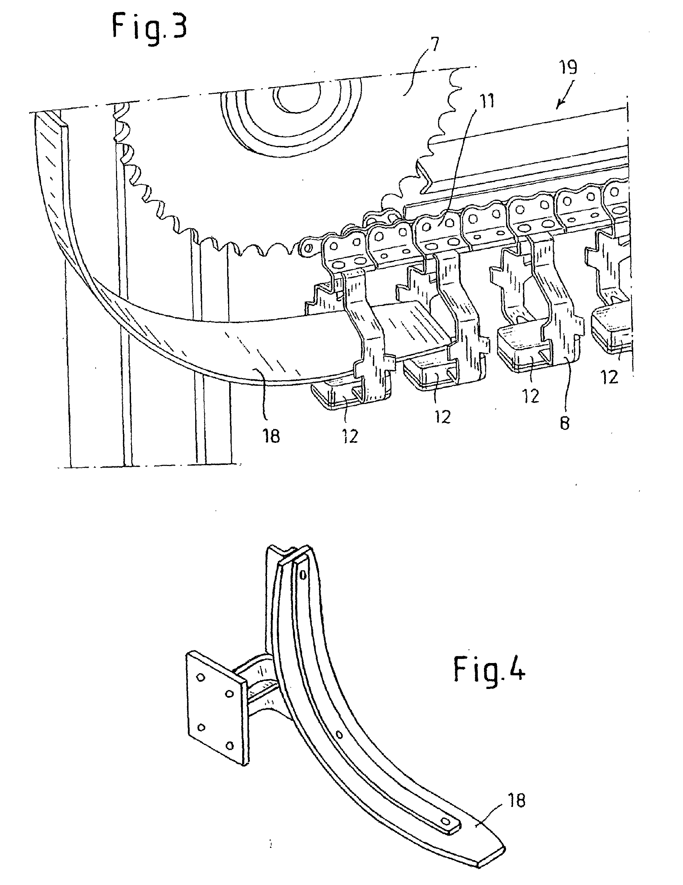

In Figur 1 ist eine erfindungsgemäße Vorrichtung 1 zum Beschichten von Gegenständen 12 (vgl. Figur 3) , insbesondere von Reinigungsmittel-Tabletten, dargestellt. Aus Gründen der Übersicht sind Details der Vorrichtung in Figur 1 nicht dargestellt, so sind beispielsweise nur Teile der metallischen Rollenketten 11 und einige der ersten Greifelemente 3 und der zweiten Greifelemente 8 dargestellt. Die Vorrichtung 1 nach Figur 1 umfasst eine nicht dargestellte Zuführstation zur sequenziellen Zuführung von zu beschichtenden Gegenständen 12 an eine erste Fördereinrichtung 2. Die erste Fördereinrichtung 2 weist dabei eine Vielzahl von ersten Greifelementen 3 zum Halten jeweils eines Gegenstandes 12 auf. Der aufgenommene zu beschichtende Gegenstand 12 wird mittels der ersten Fördereinrichtung 2 durch eine Beschichtungskammer 4 hindurchgeführt. Innerhalb der Beschichtungskammer 4 ist wenigstens eine Sprühvorrichtung 5 angeordnet, wobei Teile der Sprühvorrichtung 5 auch außerhalb der Beschichtungskammer 4 angeordnet sein können, so lange der Sprühkopf innerhalb der Beschichtungskammer 4 angeordnet ist. Die wenigstens eine Sprühvorrichtung 5 sprüht dabei ein Material in die Beschichtungskammer 4. Während des Sprühvorgangs ist der zu beschichtende Gegenstand 12 mit einem ersten elektrischen Potenzial verbunden und die Sprühvorrichtung 5 versprüht mittels einer integrierten Elektrode ein mit einem zweiten elektrischen Potenzial geladenes Material. Dabei sind das erste und das zweite elektrische Potenzial voneinander verschieden, so dass eine Anziehungskraft zwischen den beiden Potenzialen entsteht und das versprühte Material von dem zu beschichtenden Gegenstand 12 angezogen wird. Nachfolgend zu der Beschichtungskammer 4 ist bei der erfindungsgemäßen Vorrichtung 1 eine Übergabevorrichtung 6 zur Übergabe der Gegenstände 12 von der ersten Fördereinrichtung 2 an eine zweite Fördereinrichtung 7 vorgesehen. Von der Übergabevorrichtung 6 werden die aufgenommenen Gegenstände 12 von dem ersten Greifelement 3 der ersten Fördereinrichtung 2 an ein zweites Greifelement 8 der zweiten Fördereinrichtung 7 übergeben. Dazu wird der von dem ersten Greifelement 3 der ersten Fördereinrichtung 2 gehaltene Gegenstand 12 ebenfalls von dem zweiten Greifelement 8 der zweiten Fördereinrichtung 7 gegriffen, so dass der Gegenstand 12 gleichzeitig von dem ersten Greifelement 3 der ersten Fördereinrichtung 2 und dem zweiten Greifelement 8 der zweiten Fördereinrichtung 7 gehalten wird. Nachfolgend wird die Verbindung zwischen dem Gegenstand 12 und dem ersten Greifelement 3 der ersten Fördereinrichtung 2 gelöst, so dass der Gegenstand 12 nachfolgend von dem zweiten Greifelement 8 der zweiten Fördereinrichtung 7 alleine gehalten und bewegt wird. Nachfolgend zu der Übergabevorrichtung 6 ist im Verlauf der zweiten Fördereinrichtung 7 eine Behandlungskammer 9 angeordnet, durch die die Gegenstände 12 mittels der zweiten Fördereinrichtung 7 hindurchgeführt werden. Die Behandlungskammer 9 umfasst dabei mehrere Applikatoren 10 innerhalb der Behandlungskammer 9, um zumindest die Oberfläche der Gegenstände 12 mit Energie zu beaufschlagen, im vorliegenden Fall mit Wasserdampf. Durch den Wasserdampf wird das auf dem zu beschichtenden Gegenstand 12 befindliche Material, welches durch die Sprühvorrichtung 5 in der Beschichtungskammer 4 auf den Gegenstand 12 aufgebracht wurde, erhitzt und dadurch verflüssigt, so dass sich ein gleichmäßiger Film über dem zu beschichtenden Gegenstand 12 bildet.

Die Vorrichtung 1 nach Figur 1 umfasst weiterhin eine nicht dargestellte Kühlstation zum Kühlen der Oberfläche des beschichteten Gegenstands 12. Die Kühlstation ist dabei zwischen Behandlungskammer 9 und einer Entnahmestation 19 angeordnet. Es ist jedoch auch zweckmäßig, dass die Kühlstation nach der Entnahmestation 19 und vor einer nachfolgenden Verpackungs- oder Lagerungsvorrichtung angeordnet ist. Des weiteren kann es zweckmäßig sein, dass vor und hinter der Entnahmestation 19 jeweils eine Kühlstation angeordnet ist. Die vorgeschlagene Kühlstation ist beispielsweise als Luft-Gegenstrom-Kühlung ausgebildet.

Der so beschichtete Gegenstand 12 wird an einer Entnahmestation 19 von der zweiten Fördereinrichtung 7 entnommen und einer nachfolgenden Verpackungsoder Lagerungseinrichtung zugeführt. Die ersten Greifelemente 3 und die zweiten Greifelemente 8 können gleich oder verschieden ausgebildet sein, z. B. können die zweiten Greifelemente 8 aus einem schlecht wärmeleitenden Material hergestellt sein.

Wie der Figur 1 zu entnehmen ist, sind die erste Fördereinrichtung 2 und die zweite Fördereinrichtung 7 als Endlosfördermittel ausgebildet. Die erste Fördereinrichtung 2 und die zweite Fördereinrichtung 7 umfassen eine metallische Rollenkette 11, an der die ersten Greifelemente 3 bzw. die zweiten Greifelemente 8 befestigt sind.

Die ersten Greifelemente 3 und die zweiten Greifelemente 8 bestehen in dem Ausführungsbeispiel nach Figur 1 aus einem Federstahl, also einem elektrisch leitfähigen Metall, um die zu beschichtenden Gegenstände 12 mit dem ersten elektrischen Potenzial zu verbinden.

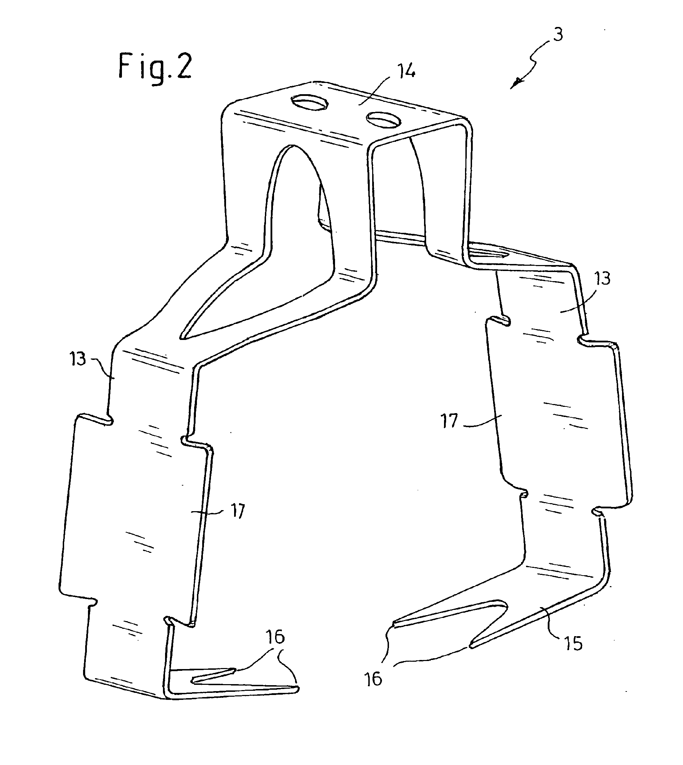

In Figur 2 ist ein erstes Greifelement 3 in einer Detailansicht dargestellt. Die zweiten Greifelemente 8 weisen im Wesentlichen dieselbe Form auf. Das erste Greifelement 3 nach Figur 2 ist als Greifelement ausgebildet, das zwei Schenkel 13 aufweist. Die Schenkel 13 weisen ein erstes Befestigungsende 14 und ein zweites Greifende 15 auf. Die Greifenden 15 der Schenkel 13 sind im Wesentlichen quer zur Bewegungsrichtung der ersten bzw. zweiten Fördereinrichtung 2, 7 verformbar. Das erste Greifelement 3 nach Figur 2 wird am Befestigungsende 14 mit der ersten Fördereinrichtung 2 verbunden. Die Greifenden 15 der Schenkel 13 weisen jeweils zwei Kontaktenden 16 auf, wobei die Kontaktenden 16 der zwei Schenkel 13 annähernd quer zur Bewegungsrichtung der ersten Fördereinrichtung 2 aufeinander zu weisen, um den Gegenstand 12 von gegenüberliegenden Seiten zu kontaktieren und zu halten. Die Schenkel 13 des ersten Greifelements 3 oder des zweiten Greifelements 8 weisen des weiteren rampenförmige Flügel 17 auf, die mit einer Spreizvorrichtung 18 zusammenwirken, um die Schenkel 13 des ersten bzw. zweiten Greifelements 3, 8 gegen die elastischen Rückstellkräfte zu verformen und so die aufeinander zu weisenden Kontaktenden 16 der Greifenden 15 der Schenkel 13 voneinander weg zu bewegen.

Die rampenförmigen Flügel 17 haben den Vorteil, dass der Verschleiß zwischen erstem/zweiten Greifelement 3, 8 und der Spreizvorrichtung 18 reduziert wird. Zweckmäßigerweise umfasst die Spreizvorrichtung 18 ein Kunststoffteil als Verschleißteil, um gezielt den Verschleiß an einem leicht auswechselbarem Teil entstehen zu lassen.

Figur 3 zeigt eine Detailansicht der zweiten Fördereinrichtung 8 im Bereich der Entnahmestation 19, wobei Teile der metallischen Rollenkette 11 zur besseren Übersicht nicht dargestellt sind. Die Entnahmestation 19 umfasst eine Spreizvorrichtung 18, um die zweiten Greifelemente 8 der zweiten Fördereinrichtung 7 zu spreizen, so dass die gehaltenen Gegenstände 12 von den zweiten Greifelementen 8 gelöst werden. Die Spreizvorrichtung 18 gemäß Figur 3 ist in einer Detailansicht in Figur 4 dargestellt. Die Spreizvorrichtung 18 ist so ausgebildet, dass die zweiten Greifelemente 8 mittels der Flügel 17 in die Spreizvorrichtung 18 eingefädelt werden. Durch die nachfolgende Vergrößerung des Querschnitts der Spreizvorrichtung 18 werden die Schenkel 13 des zweiten Greifelements 8 gegen die elastischen Rückstellkräfte voneinander weg bewegt, so dass der gehaltene Gegenstand 12 von dem zweiten Greifelement 8 gelöst wird. Durch die anschließende Verringerung des Querschnitts der Spreizvorrichtung 18 kehrt das zweite Greifelement 8 wieder in seine ursprüngliche Form zurück.

Entsprechende Spreizvorrichtungen 18 sind ebenfalls im Bereich der Zuführstation, der Übergabevorrichtung 6 und der Entnahmestation 19 an der ersten Fördereinrichtung 2 und/oder der zweiten Fördereinrichtung 7 angeordnet, um den zu beschichtenden oder beschichteten Gegenstand 12 mit einem Greifelement 3, 8 zu verbinden oder von diesem zu lösen.

Die Beschichtungskammer 4 der Vorrichtung 1 nach Figur 1 besteht aus PTFE oder ist innenseitig mit PTFE (Polytetrafluorethylen) beschichtet. Da PTFE nicht leitend und praktisch nicht benetzbar ist, bleibt das in die Beschichtungskammer 4 eingesprühte Material nicht an der Oberfläche der Beschichtungskammer 4 haften.

Die Sprühvorrichtung 5 der Beschichtungskammer 4 nach Figur 1 ist zum Versprühen eines pulverförmigen Materials ausgebildet, wobei die Korngröße vorzugsweise zwischen 1 und 1.000 µm liegt. Des weiteren umfasst die Beschichtungskammer 4 eine Absaugvorrichtung, nicht dargestellt, zum Absaugen eines Überschusses an Material (Overspray) welches mittels der Sprühvorrichtung 5 in die Beschichtungskammer 4 gesprüht wurde. Die Absaugvorrichtung steht in Strömungsverbindung mit einer Absetzkammer, nicht dargestellt, wobei die Absetzkammer mit einer Fördereinrichtung, nicht dargestellt, zur Förderung von Beschichtungsmaterial aus der Absetzkammer zu der Sprühvorrichtung 5 verbunden ist. Zwischen Absetzkammer und Sprühvorrichtung 5 ist eine Klassifizierungseinrichtung, nicht dargestellt, zum Abscheiden von Partikeln vorgesehen, die eine vorgegebene Korngröße, z. B. 1.000 µm, überschreiten, und eine Mahleinrichtung, nicht dargestellt, zur Zerkleinerung von durch die Klassifizierungseinrichtung abgeschiedenen Partikel und Rückführung der zerkleinerten Partikel zu der Fördereinrichtung.

### Bezugszeichenliste:

- 1: Vorrichtung
- 2: Erste Fördereinrichtung
- 3: Erstes Greifelement
- 4: Beschichtungskammer
- 5: Sprühvorrichtung
- 6: Übergabevorrichtung
- 7: Zweite Fördereinrichtung
- 8: Zweites Greifelement
- 9: Behandlungskammer
- 10: Applikator
- 11: Metallische Rollenkette
- 12: Gegenstand
- 13: Schenkel
- 14: Befestigungsende
- 15: Greifende
- 16: Kontaktende
- 17: Flügel
- 18: Spreizvorrichtung
- 19: Entnahmestation

## Patentansprüche

1. Vorrichtung (1) zum Beschichten von Gegenständen (12), insbesondere von Reinigungsmittel-Tabletten, umfassend eine Zuführstation zur sequenziellen Zuführung an eine erste Fördereinrichtung (2), wobei die erste Fördereinrichtung (2) eine Vielzahl von ersten Greifelementen (3) zum Halten jeweils eines Gegenstandes (12) aufweist, eine Beschichtungskammer (4), durch die die Gegenstände (12) mittels der ersten Fördereinrichtung (2) hindurchführbar sind, mit wenigstens einer Sprühvorrichtung (5) oder Verwirbelungseinrichtung innerhalb der Beschichtungskammer (4) zur Bereitstellung eines Partikel-Luft-Gemischs, wobei die Partikel ein Material umfassen, mit dem die Gegenstände (12) beschichtet werden sollen, wobei der zu beschichtende Gegenstand (12) mit einem ersten elektrischen Potenzial verbunden ist, eine Elektrode zur Erzeugung eines zweiten elektrischen Potenzials, wobei die Partikel mittels der Elektrode mit dem zweiten elektrischen Potenzial versehen werden, wobei das erste und zweite elektrische Potenzial voneinander verschieden sind, eine zweite Fördereinrichtung (7), mit einer Vielzahl von zweiten Greifelementen (8) zum Halten jeweils eines Gegenstandes (12), eine Übergabevorrichtung (6), die zwischen der ersten und der zweiten Fördereinrichtung (2, 7) angeordnet ist, zur Übergabe der Gegenstände (12) von den ersten Greifelementen (3) der ersten Fördereinrichtung (2) an die zweiten Greifelemente (8) der zweiten Fördereinrichtung (7), eine Behandlungskammer (9), durch die die Gegenstände (12) mittels der zweiten Fördereinrichtung (7) hindurchführbar sind, mit einem oder mehreren Applikatoren (10) innerhalb der Behandlungskammer (9) zum Beaufschlagen zumindest der Oberfläche der Gegenstände (12) mit Energie, und eine Entnahmestation (19) zur Entnahme der behandelten Gegenstände (12) von der zweiten Fördereinrichtung (7).

2. Vorrichtung nach Anspruch 1, **dadurch gekennzeichnet, dass** die Elektrode in die Sprühvorrichtung (5) integriert ist.

3. Vorrichtung (1) nach Anspruch 1 oder 2, weiterhin umfassend wenigstens eine Kühlstation zum Kühlen der Oberfläche der Gegenstände (12).

4. Vorrichtung (1) nach Anspruch 3, **dadurch gekennzeichnet, dass** die Kühlstation zwischen Behandlungskammer (9) und Entnahmestation (19) angeordnet ist, oder dass die Kühlstation nach der Entnahmestation (19) angeordnet ist, oder dass vor und hinter der Entnahmestation (19) eine Kühlstation angeordnet ist.

5. Vorrichtung (1) nach einem der Ansprüche 3 oder 4, **dadurch gekennzeichnet, dass** mindestens eine Kühlstation eine Luft-Gegenstrom-Kühlung umfasst.

6. Vorrichtung (1) nach einem der Ansprüche 1 bis 5, **dadurch gekennzeichnet, dass** die erste und/oder zweite Fördereinrichtung (2, 7) ein endloses Fördermittel umfassen.

7. Vorrichtung (1) nach einem der Ansprüche 1 bis 6, **dadurch gekennzeichnet, dass** wenigstens die ersten Greifelemente (3) ein elektrisch leitfähiges Material umfassen, um die zu beschichtenden Gegenstände (12) mit dem ersten elektrischen Potenzial zu verbinden.

8. Vorrichtung (1) nach Anspruch 7, **dadurch gekennzeichnet, dass** wenigstens die ersten Greifelemente (3) aus Metall bestehen, vorzugsweise aus Federstahl.

9. Vorrichtung (1) nach einem der Ansprüche 1 bis 8, **dadurch gekennzeichnet, dass** die Vielzahl von ersten oder zweiten Greifelementen (3, 8) Klammern umfassen, die wenigstens zwei Schenkel (13) aufweisen, die im Wesentlichen quer zur Bewegungsrichtung der ersten und/oder zweiten Fördereinrichtung (2, 7) gegen elastische Rückstellkräfte verformbar sind, wobei die Schenkel (13) ein erstes Befestigungsende (14) und ein zweites Greifende (15) aufweisen, und die Klammern nahe des Befestigungsendes (14) mit der ersten und/oder zweiten Fördereinrichtung (2, 7) verbunden sind, und wobei jedes Greifende (15) eines Schenkels (13) wenigstens ein Kontaktende (16), vorzugsweise wenigstens zwei Kontaktenden (16) aufweist, wobei die Kontaktenden (16) der wenigstens zwei Schenkel (13) annähernd quer zur Bewegungsrichtung der ersten und/oder zweiten Fördereinrichtung (2, 7) aufeinander zu weisen, um den Gegenstand (12) von gegenüberliegenden Seiten zu kontaktieren.

10. Vorrichtung (1) nach einem der Ansprüche 1 bis 9, **dadurch gekennzeichnet, dass** der Applikator (10) Düsen zum Einblasen von Wasserdampf, insbesondere überhitztem Wasserdampf, umfasst.

11. Vorrichtung (1) nach einem der Ansprüche 1 bis 10, **dadurch gekennzeichnet, dass** die Beschichtungskammer (4) Wandungen aufweist, wobei zumindest die innenseitigen Oberflächen aus PTFE bestehen.

12. Vorrichtung (1) nach einem der Ansprüche 1 bis 11, **dadurch gekennzeichnet, dass** die Sprühvorrichtung (5) ausgebildet ist zum Versprühen eines pulverförmigen Materials, vorzugsweise mit einer Korngröße zwischen 1 und 1.000 µm.

13. Vorrichtung (1) nach einem der Ansprüche 1 bis 12, **dadurch gekennzeichnet, dass** die Beschichtungskammer (4) eine Absaugvorrichtung umfasst zum Absaugen eines Überschusses an Material, welches mittels der Sprühvorrichtung (5) in die Beschichtungskammer (4) gesprüht wurde.

14. Vorrichtung (1) nach Anspruch 13, **dadurch gekennzeichnet, dass** die Absaugvorrichtung in Strömungsverbindung mit einer Absetzkammer steht, wobei die Absetzkammer mit einer Fördereinrichtung zur Förderung von Beschichtungsmaterial aus der Absetzkammer zu der wenigstens einen Sprühvorrichtung (5) verbunden ist.

15. Vorrichtung (1) nach Anspruch 14, **dadurch gekennzeichnet, dass** zwischen Absetzkammer und Sprühvorrichtung (5) eine Klassifizierungseinrichtung zum Abscheiden von Partikeln vorgesehen ist, die eine vorgegebene Korngröße überschreiten, und einer optionalen Mahleinrichtung zur Zerkleinerung von durch die Klassifizierungseinrichtung abgeschiedenen Partikel und Rückführung der zerkleinerten Partikel.

16. Vorrichtung (1) nach einem der Ansprüche 1 bis 15, **dadurch gekennzeichnet, dass** die Zuführstation, die erste Fördereinrichtung (2), die zweite Fördereinrichtung (7), die Übergabevorrichtung (6) und/oder die Entnahmestation (19) eine Einrichtung zum Spreizen (18) der ersten bzw. zweiten Greifelemente (3, 8) aufweist, um den zu beschichtenden oder beschichteten Gegenstand (12) mit einem Greifelement (3, 8) zu verbinden oder von diesem zu lösen.

## Claims

1. Apparatus (1) for coating objects (12), particularly detergent tablets, comprising a feeding station for sequentially feeding to a first transport device (2), wherein the first transport device (2) has a plurality of first grasping elements (3) for grasping one object (12) each, a coating chamber (4), through which the objects (12) are transportable by the first transport device (2), with at least one spraying device (5) or vortexing device within the coating chamber (4) for providing a particle air mixture, wherein the particles comprise a material to coat the objects (12) with, wherein the object (12) to be coated is connected to a first electrical voltage, an electrode for generating a second electrical voltage, wherein the particles are supplied with the second electrical voltage by the electrode, wherein the first and second electrical voltages are different from each other, a second transport device (7), with a plurality of second grasping elements (8) for grasping one object (12) each, a handover device (6) located between the first and the second transport device (2, 7) for handing over the objects (12) from the first grasping element (3) of the first transport device (2) to the second grasping element (8) of the second transport device (7), a treatment chamber (9) through which the objects (12) are transportable by the second transport device (7) with one ore more applicators (10) within the treatment chamber (9) for supplying at least the surface of objects (12) with energy, and a removal device (19) for removal of the treated objects (12) from the second transport device (7).

2. Apparatus according to claim 1, **characterized in that** the electrode is integrated into the spraying device (5).

3. Apparatus (1) according to claim 1 or 2, further comprising at least one cooling device for cooling the surface of the objects (12).

4. Apparatus (1) according to claim 3, **characterized in that** the cooling device is located between the treatment chamber (9) and the removal device (19)
or that the cooling device is located after the removal device (19), or that a cooling device is located in front of or behind the removal device (19).

5. Apparatus (1) according to any of claims 3 or 4, **characterized in that** at least one cooling device comprises an air counter flow cooling.

6. Apparatus (1) according to any of claims 1 to 5, **characterized in that** the first and/or second transport device (2, 7) comprises an endless conveyor.

7. Apparatus (1) according to any of claims 1 to 6, **characterized in that** at least the first grasping elements (3) comprise an electrical-conductive material to connect the objects (12) to be coated with the first electrical voltage.

8. Apparatus (1) according to claim 7, **characterized in that** at least the first grasping elements (3) consist of metal, preferably of spring steel.

9. Apparatus (1) according to any of claims 1 to 8, **characterized in that** the plurality of first or second grasping elements (3, 8) comprise clamps, which have at least two legs (13), that are primarily deformable against elastic restoring forces mainly transversely to the transport direction of the first and/or second transport device (2, 7), wherein the legs (13) have a first mounting end (14) and a second grasping end (15), and the clamps are connected close to the mounting end (14) with the first and/or second transport device (2, 7), and wherein each grasping end (15) of a leg (13) has at least one contact end (16), preferably at least two contact ends (16), wherein the contact ends (16) of the at least two legs (13) are directed mainly transversely to the transport direction of the first and/or second transport device (2, 7) to each other to contact the object (12) from opposing sides.

10. Apparatus (1) according to any of claims 1 to 9, **characterized in that** the applicator (10) comprises nozzles to inject steam, particularly superheated steam.

11. Apparatus (1) according to any of claims 1 to 10, **characterized in that** the coating chamber (4) has walls, wherein at least the inner surfaces consist of PTFE.

12. Apparatus (1) according to any of claims 1 to 11, **characterized in that** the spraying device (5) is designed to spray a material in powder form, preferably with a particle size of from 1 to 1,000 µm.

13. Apparatus (1) according to any of claims 1 to 12, **characterized in that** the coating chamber (4) comprises an exhaust device to exhaust an excess of material, which was sprayed into the coating chamber (4) by the spraying device (5).

14. Apparatus (1) according to claim 13, **characterized in that** the exhaust device is flow-connected with a settlement chamber, wherein the settlement chamber is connected to a conveyor device to convey the coating material from the settlement chamber to the at least one spraying device (5).

15. Apparatus (1) according to claim 14, **characterized in that** a classification device is arranged between the settlement chamber and the spraying device (5) to separate particles, which exceed a given particle size, and an optional grinding device to grind the particles separated by the classification device, and to refeed the grinded particles.

16. Apparatus (1) according to any of claims 1 to 15, **characterized in that** the feeding station, the first transport device (2), the second transport device (7), the handover device (6), and/or the removal device (19) have a device (18) to spread the first and second grasping elements (3, 8), respectively, to connect or release the object (12) to be coated or the coated object via a grasping element (3, 8).

## Revendications

1. Installation (1) pour le revêtement d'objets (12), en particulier de comprimés de détergents, comprenant une station d'alimentation pour une amenée séquentielle à un premier dispositif convoyeur (2), ledit premier dispositif convoyeur (2) comportait une pluralité de premiers éléments de préhension (3) pour le maintien d'un objet (12) chacun, une chambre de revêtement(4), au travers de laquelle les objets (12) sont transportables au moyen du premier dispositif convoyeur (2), avec au moins un dispositif de pulvérisation (5) ou un dispositif générateur de turbulences à l'intérieur de la chambre de revêtement (4) pour la préparation d'un mélange particules-air, les particules comprenant un matériau avec lequel les objets (12) doivent être revêtus, l'objet (12) à revêtir étant relié à un premier potentiel électrique, une électrode pour la génération d'un deuxième potentiel électrique, les particules étant pourvues au deuxième potentiel électrique au moyen de l'électrode, le premier et le deuxième potentiels électriques étant différents l'un de l'autre, un deuxième dispositif convoyeur (7), avec une pluralité de deuxièmes éléments de préhension (8) pour le maintien d'un objet (12) chacun, un dispositif de transfert (6) disposé entre le premier et le deuxième dispositifs convoyeurs (2, 7) pour le transfert de l'objet (12) des premiers éléments de préhension (3) du premier dispositif convoyeur (2) aux deuxièmes éléments de préhension (8) du deuxième dispositif convoyeur (7), une chambre de traitement (9), au travers de laquelle les objets (12) sont transportables au moyen du deuxième dispositif convoyeur (7), avec un ou plusieurs applicateurs (10) à l'intérieur de la chambre de traitement (9) pour une application d'énergie au moins à la surface des objets (12), et une station de prélèvement (19) pour le prélèvement des objets (12) traités du deuxième dispositif convoyeur (7).

2. Installation selon la revendication 1, **caractérisée en ce que** l'électrode est intégrée au dispositif de pulvérisation (5).

3. Installation (1) selon la revendication 1 ou la revendication 2, comprenant en outre au moins une station de refroidissement pour refroidir la surface des objets (12).

4. Installation (1) selon la revendication 3, **caractérisée en ce que** la station de refroidissement est disposée entre la chambre de traitement (9) et la station de prélèvement (19), ou **en ce que** la station de refroidissement est disposée en aval de la station de prélèvement (19), ou **en ce qu'**une station de refroidissement est disposée en amont et en aval de la station de prélèvement (19).

5. Installation (1) selon l'une des revendications 3 ou 4, **caractérisée en ce qu'**au moins une station de refroidissement comprend un refroidissement à contre-courant d'air.

6. Installation (1) selon l'une des revendications 1 à 5, **caractérisée en ce que** le premier et/ou le deuxième dispositif convoyeur (2, 7) comprennent un moyen de transport sans fin.

7. Installation (1) selon l'une des revendications 1 à 6, **caractérisée en ce qu'**au moins les premiers éléments de préhension (3) comprennent un matériau électriquement
conducteur, pour relier les objets (12) à revêtir au premier potentiel électrique.

8. Installation (1) selon la revendication 7, **caractérisée en ce qu'**au moins les premiers éléments de préhension (3) sont en métal, préférentiellement en acier à ressorts.

9. Installation (1) selon l'une des revendications 1 à 8, **caractérisée en ce que** la pluralité des premiers ou deuxièmes éléments de préhension (3, 8) comprend des agrafes qui comportent au moins deux branches (13) déformables contre des forces de rappel élastiques essentiellement transversalement à la direction de déplacement du premier et/ou du deuxième dispositifs convoyeurs (2, 7), lesdites branches (13) présentant une première extrémité de fixation (14) et une deuxième extrémité de préhension (15), les agrafes étant raccordées au premier et/ou au deuxième dispositifs convoyeurs (2, 7) à proximité de l'extrémité de fixation (14), et chaque extrémité de préhension (15) d'une branche (13) présentant au moins une extrémité de contact (16), préférentiellement au moins deux extrémités de contact (16), lesdites extrémités de contact (16) des deux branches (13) ou plus étant dirigées l'une vers l'autre sensiblement transversalement à la direction de déplacement du premier et/ou du deuxième dispositifs convoyeurs (2, 7), pour entrer en contact avec l'objet (12) sur des côtés opposés.

10. Installation (1) selon l'une des revendications 1 à 9, **caractérisée en ce que** l'applicateur (10) comprend des buses pour le soufflage de vapeur d'eau, en particulier de vapeur d'eau surchauffée.

11. Installation (1) selon l'une des revendications 1 à 10, **caractérisée en ce que** la chambre de revêtement (4) comporte des parois, au moins les surfaces intérieures de celles-ci étant en PTFE.

12. Installation (1) selon l'une des revendications 1 à 11, **caractérisée en ce que** le dispositif de pulvérisation (5) est réalisé pour la pulvérisation d'un matériau pulvérulent, préférentiellement avec une granulométrie comprise entre 1 et 1.000 µm.

13. Installation (1) selon l'une des revendications 1 à 12, **caractérisée en ce que** la chambre de revêtement (4) comprend un dispositif d'aspiration pour l'aspiration d'un excédent de matériau pulvérisé dans la chambre de revêtement (4) au moyen du dispositif de pulvérisation (5).

14. Installation (1) selon la revendication 13, **caractérisée en ce que** le dispositif d'aspiration est en liaison de flux avec une chambre de dépôt, ladite chambre de dépôt étant reliée à un dispositif convoyeur pour le transport de matériau de revêtement de la chambre de dépôt vers le ou les dispositifs de pulvérisation (5).

15. Installation (1) selon la revendication 14, **caractérisée en ce qu'**un dispositif de classification est prévu entre la chambre de dépôt et le dispositif de pulvérisation (5) pour la séparation de particules qui dépassent une granulométrie définie, et un dispositif de broyage en option pour la fragmentation des particules séparées par le dispositif de classification et le retour des particules fragmentées.

16. Installation (1) selon l'une des revendications 1 à 15, **caractérisée en ce que** la station d'alimentation, le premier dispositif convoyeur (2), le deuxième dispositif convoyeur (7), le dispositif de transfert (6) et/ou la station de prélèvement (19) comportent un dispositif d'écartement (18) des premiers ou deuxièmes éléments de préhension (3, 8), pour raccorder l'objet (12) à revêtir ou revêtu à un élément de préhension (3, 8) ou pour le desserrer de celui-ci.
